# EUROPEAN PATENT SPECIFICATION

(11) **EP 0 364 261 B1**
(45) Date of publication and mention of the grant of the patent: **19.07.1995**
(21) Application number: 89310440.6
(22) Date of filing: 12.10.1989
(51) Int. Cl.: H04N 7/24

(54) **Highly efficient coding apparatus**
Kodiergerät mit hoher Wirksamkeit
Dispositif de codage à efficience élevée

(30) Priority: 14.10.1988 JP 259141/88; 25.10.1988 JP 268894/88; 28.10.1988 JP 272298/88
(43) Date of publication of application: 18.04.1990
(73) Proprietor: SONY CORPORATION, Tokyo (JP)
(72) Inventor: Kondo, Tetsujiro, Shinagawa-ku Tokyo (JP)
(74) Representative: Ayers, Martyn Lewis Stanley

(56) References cited:
- US-A- 4 677 479
- US-A- 4 703 352
- NHK LABORATORIES NOTE, no. 101, October 1966, pages 1-24, Tokyo, JP; K:FUKUSHIMA. "Television bandwidth compression by multi-mode interpolation"
- PROCEEDING OF THE 2ND WORKSHOP ON SIGNAL PROCESSING OF HDTV, L'Aquila, 29thFebruary - 2nd March 1988, pages 279-285, Elsevier, Amsterdam, NL; P.E. ELMER:"Variable compression coding of HDTV signals"

## Description

This invention relates to a highly efficient coding apparatus for a picture signal such as a television signal and, more particularly, to a structure in which sub-sampling and a block coding such as a coding adaptive to the dynamic range of the picture signal, and the like are combined.

In the transmission of a digital video signal, it is known that, a method of compressing the amount of data to be transmitted as compared with an original data amount, is known which involves thinning-out picture elements by subsampling to lower the subsampling frequency. It has been proposed to thin-out picture data to 1/2 and to transmit a two-bit flag indicative of the position of a subsampling point and that of a subsampling point used at the time of interpolation of thinned-out picture elements at the decoding side. In the case where one picture element data of a digital video signal is represented as eight bits, the number of bits per picture element becomes five if the two bits of the flag are added, so that the compression rate is (5/8).

Since a subsampling pattern, for instance a line-quincunx is always fixed in this conventional subsampling, there is the problem that the quality of a reproduced picture noticeably deteriorates in the region of a contour of an object in the picture. Particularly, with the subsampling period lengthened more than 1/2, the deterioration of the picture quality becomes very marked.

To solve the above mentioned problem, the present applicant has proposed an encoding method as described in the specification of the Japanese patent laid open publication (JP,A) number 266924/1987. In this method, a picture is divided into a number of two-dimensional blocks, the difference (dynamic range) between the maximum value and the minimum value of the data of a number of picture elements in the block is obtained, and the period of the subsampling is varied depending on the dynamic range of the blocks. More specifically, with respect to a block having a small dynamic range, it is judged to be a planar picture, and the subsampling period is lengthened to (8/1), for example. Also, with respect to a block having a comparatively large dynamic range, it is judged to be a changing picture, and the subsampling period is reduced to (1/2). Further, with respect to a block having an extremely large dynamic range, it is judged to be a remarkably changing picture so that no subsampling is applied.

Since the subsampling period is set for a unit of a block in a highly efficient coding apparatus switching a subsampling frequency selectively depending on dynamic range as described above, whether the picture quality of a reproduced picture is good or poor occurs is determined for a unit of a block. For this reason, noticeable block distortion may appear. Also, the subsampling periods available for selection are limited, so that the adaptability to the characteristics of a particular picture is inadequate.

The present applicant has proposed a highly efficient coding apparatus for a picture signal which does not cause the deterioration on a per-block basis and which can form a subsampling pattern having variable density adaptive to a characteristic of a picture so as to provide an excellent reproduction picture (refer to the specification of the Japanese patent application number 208975/1987).

Also, a highly efficient coding apparatus for a picture signal which has the same advantage as the invention disclosed in said specification of the patent application and which uses real data at the time of calculation of interpolation errors to enable real-time processing and so as to be applicable to animation has been proposed by the present applicant (refer to the specification of the Japanese patent application number 85210/1987 published as JP-A-63-250,987).

In the case of the above proposed variable density subsampling, since the thinning-out process is done adaptively, the amount of generated data varies greatly depending on the degree of correlation of a picture. As a consequence, there are problems in ensuring that the amount of data transmitted does not exceed a predetermined value and where the technique is applied to a transmission path (for example, a digital VTR) which requires an almost constant data rate. Also, in the case of a small transmission capacity, a sufficient reduction in the amount of data amount is not achieved only by the subsampling.

It is, therefore, an object of the present invention to provide a highly efficient coding apparatus for video data, which is capable of solving the known problems mentioned above. The invention is defined in the appended claims.

According to an aspect of the present invention, there is provided a highly efficient coding apparatus for coding digital video data in a format composed of blocks of digital video data representing plural picture elements and allowing compression of the video data, comprising:
means for receiving the digital video data represented by respective picture element data having a first predetermined number of bits per element,
means for designating at least one picture element for each of said blocks as an elementary picture element,
means for predicting values of respective ones of subject picture element data,
means for detecting respective predictive errors of the predicted values from the real values of the picture element data,
means for determining if each predictive error is greater than a threshold value,
means for generating flag data by the output of said determining means,
means for gating said elementary picture element data and the subject picture element data for which the respective predictive errors are greater than the threshold value,
first and second detecting means for detecting maximum and minimum values, respectively of the output of said gating means in each of said blocks,
means for generating dynamic range information for each said block from said maximum and minimum values for the respective block,
means for generating modified digital video data for each said block as the difference between each of the output data of said gating means and one of said maximum and minimum values for said respective block,
means for encoding modified digital video data with a variable digitised bit number determined by said flag data for said respective block so as to provide coded data of variable bit length, whereby the data amount of said coded data for each said respective block can be maintained substantially constant, and
transmitting means for transmitting at least said coded data and said flag data.

As will become apparent from the following description, the present invention can provide an improved highly efficient coding apparatus which can attain high compression ratio by employing compression in the level direction, which minimises the quality deterioration of the reproduced image, while allowing the amount of the transmitted data in a block to be substantially fixed, and which requiring only small capacity buffer memory.

The invention will be further described by way of non-limitative example with reference to the accompanying drawings, in which:-
Figure 1 is a block diagram of a first embodiment of the present invention;
Figure 2 is a schematic diagram for explaining a block which is a unit for a coding process;
Figure 3 is a block diagram for explaining a subsampling encoder 3 of figure 1;
Figure 4 is a schematic diagram for explaining various kinds of picture elements in a block;
Figure 5 is a schematic diagram for explaining a digitising operation;
Figure 6 is a block diagram of a second embodiment of the present invention;
Figure 7 is a schematic diagram for explaining an operation of a block segmentation circuit 102 of figure 6;
Figure 8 is a block diagram of an interpolation error detector 117 of figure 6;
Figure 9 is a block diagram of a ROM 145 of figure 8; and
Figure 10 is a block diagram of a third embodiment of the present invention.

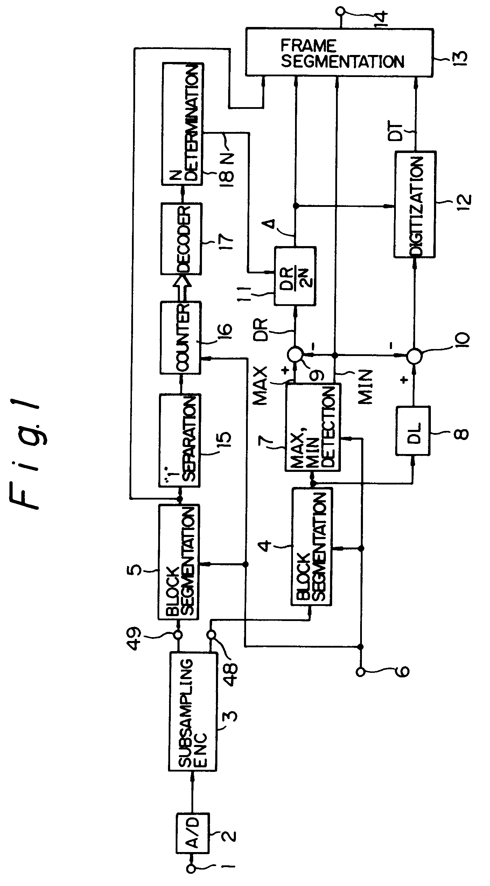

Figure 1 shows a first embodiment of this invention, and in figure 1, a picture signal, for instance, a video signal is supplied to an input terminal indicated by 1. The video signal is converted into a digital video signal by an A/D converter 2. The digital video signal has a sampling frequency of 13.5 [MHz] as an example, and one picture element data is converted to a data word of eight bits.

The digital video signal is supplied to a subsampling encoder 3. As will be described later, data of a picture element to be transmitted is generated at an output terminal 48 of the subsampling encoder 3 after a thinning-out process, and a control code is generated at an output terminal 49. Transmission or thinning-out of respective picture element is identified by the control code.

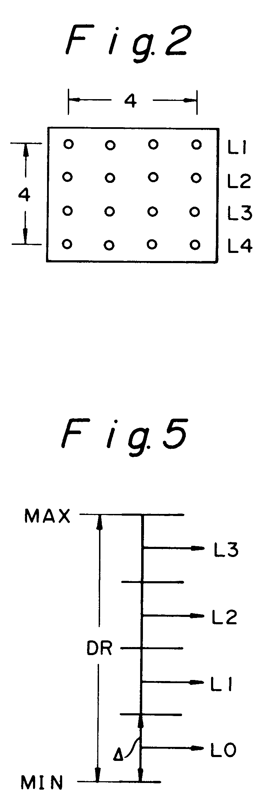

An ADRC encoder is provided on the output side of the subsampling encoder 3, and encoding is made to be adaptive to the dynamic range DR of data of a two-dimensional block of data, for example. With the segmentation of one frame, a block of (4 x 4 = 16) picture elements is formed as shown in figure 2. It should be noted that there is not always data of 16 picture elements at this stage, since the picture element data supplied from the output terminal 48 of the subsampling encoder 3 has been subjected to the predetermined thinning-out process. The digitisation bit number N in the ADRC encoder is set depending on the subsampling rate in the subsampling encoder 3. The subsampling rate is judged every block. In this embodiment, the digitisation bit number is set at any one of the possible bit numbers (8, 7, 6, 5, 4, 3, 2, 1).

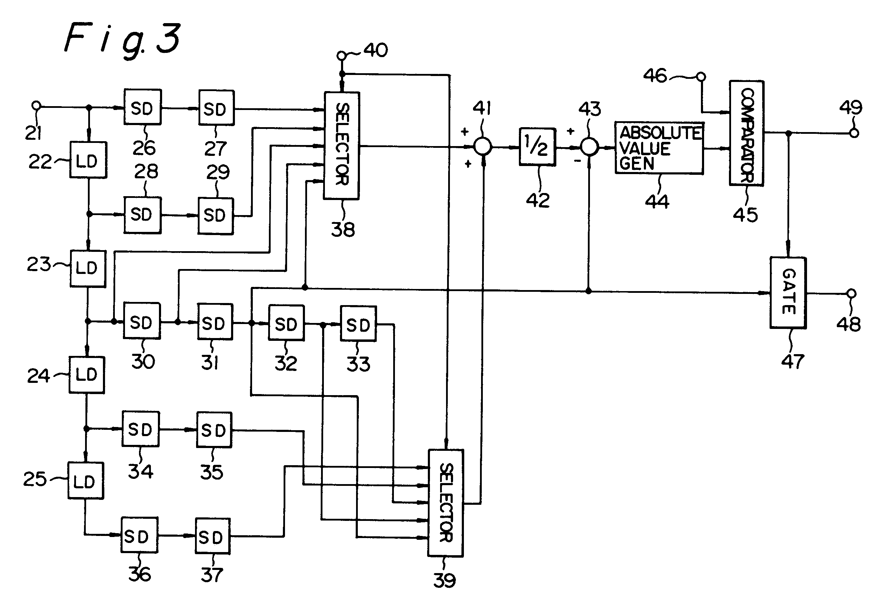

Referring to figure 3, the subsampling encoder 3 will be described. In figure 3, a digital video signal is given to an input terminal indicated by 21 from the A/D converter 2. A series circuit of line delay circuits 22, 23, 24, 25 indicated by LD is connected to the input terminal 21. Also, sample delay circuits 26 and 27 indicated by SD are connected in series with respect to the input terminal 21, sample delay circuits 28 and 29 are serially coupled on the output side of the line delay circuit 22, sample delay circuits 30, 31, 32 and 33 are connected in series on the output side of the line delay circuit 23, sample delay circuits 34 and 35 are serially coupled on the output side of the line delay circuit 24, and sample delay circuits 36 and 37 are coupled in series on the output side of the line delay circuit 25. These line delay circuits 22, 23, 24, 25 have a delay amount of one horizontal period, respectively, and the sample delay circuits 26, 27, 28, ..., 37 have a delay amount of one sampling period, respectively. Data of plural picture elements contained in a predetermined two-dimensional area of a television picture are simultaneously taken out by the line delay circuits 22 to 25 and the sample delay circuits 26 to 37.

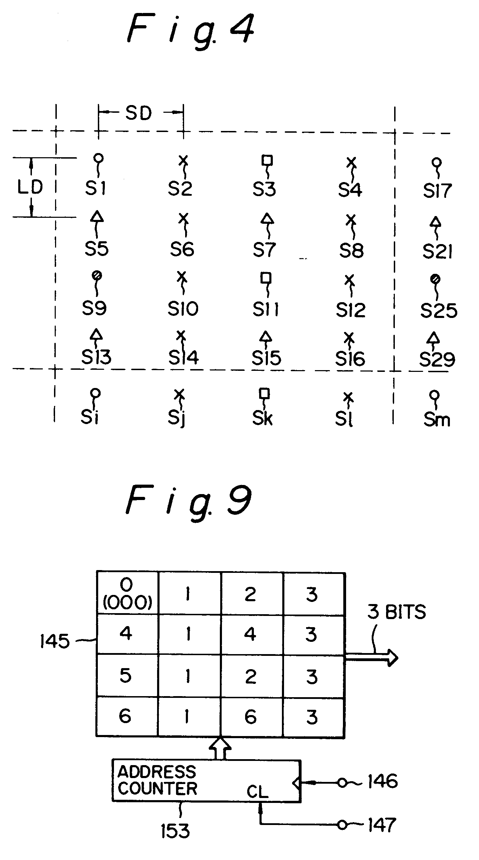

Referring to figure 4, the process of subsampling according to this embodiment will be explained. Figure 4 shows a part of the area of the two-dimensional (field or frame) of an input digital video signal. As shown in figure 4, an interval of picture elements in the horizontal direction corresponds to a sampling period SD, and an interval of picture elements in the vertical direction corresponds to a line interval LD. Each of symbols (△, ●, □, X, ○) attached to each picture element represent the differing interpolation procedures applied to them.

First, ○ represents an elementary picture element occurring every four lines and every four picture elements. One elementary picture element out of the 16 picture elements is necessarily transmitted without being subjected to thinning-out. Picture elements other than the elementary picture element are compared with an average value of two picture elements as mentioned below, and when a difference (predictive error) between picture element data and the average value is equal to or smaller than a threshold value, the thinning-out is carried out. Conversely, when the predictive error exceeds the threshold value, the transmission is carried out without thinning-out.
1. Picture elements represented by △: are compared with the average value of picture element data respectively at the corresponding column positions in the adjacent lines above and below.
   For instance, a picture element S5 is compared with an average value [1/2 (S1 + S9)].
2. Picture elements represented by ● : are compared with the average value of picture elements respectively at the corresponding positions in the lines one line away, above and below.
   For example, a picture element S9 is compared with an average value [1/2 (S1 + Si)].
3. Picture elements represented by □: are compared with the average value of picture elements two columns to either side of it in the same line.
   For example, a picture element S11 is compared with an average [1/2 (S9 + S25)].
4. Picture elements represented by X: are compared with the average value of picture elements one column to either side of it in the same line.
   For example, a picture element S6 is compared with an average [1/2 (S5 + S7)].

The output data of the sample delay circuit 31 is a subject picture element. The output data of the sample delay circuit 31 is supplied to fifth input terminals of the selectors 38 and 39, the subtractor 43 and the gate circuit 47. The selectors 38 and 39 have first to fifth input terminals. The selectors 38 and 39 sequentially and selectively produce input data respectively applied to these five input terminals to their output terminals by a selecting signal from a terminal 40 which is synchronised with a sampling clock.

The output data of the sample delay circuit 27 is supplied to the first input terminal of the selector 38, and the output data of the sample delay circuit 37 is applied to the first input terminal of the selector 39. As a result, when a subject picture element is a picture element indicated by ●, input data respectively supplied to the first input terminals of the selectors 38 and 39 are selected.

The output data of the sample delay circuits 29 and 35 are supplied to the second input terminals of the selectors 38 and 39, respectively. Consequently, in the case where a subject picture element is a picture element represented by △, input data supplied to the respective second input terminals of the selectors 38 and 39 are selected.

The output data of the line delay circuit 23 and the output data of the sample delay circuit 33 are supplied to the third input terminals of the selectors 38 and 39, respectively. As a result, in the case where a subject picture element is the one represented by □, input data supplied to the respective third input terminals of the selectors 38 and 39 are selected.

The output data of the sample delay circuits 30 and 32 are given to fourth input terminals of the selectors 38 and 39. Therefore, when a subject picture element is the one represented by X, input data supplied to the fourth input terminals of the selectors 38 and 39 are selected.

The output data (subject picture element) of the sample delay circuit 31 is applied to the fifth input terminals of the selectors 38 and 39. Consequently, when a subject picture element is the elementary picture element represented by ○, both of the selectors 38 and 39 select the elementary picture element.

The output data of the selectors 38 and 39 are fed to an adder 41, and the output signal of the adder 41 is fed to a 1/2 multiplication circuit 42. As a result, the average value data of two picture elements respectively selected by the selectors 38 and 39 is generated from the 1/2 multiplication circuit 42. The average value data and data of the subject picture element from the sample delay circuit 31 are supplied to a subtractor 43, and difference data from the subtractor 43 is converted into absolute values at an absolute-value-generating circuit 44. The output data of the absolute-value-generating circuit 44 is supplied to a comparator 45 and compared with a threshold value from a terminal 46.

The output data of the absolute-value-generating circuit 44 represents a predictive error generated when an interpolation is performed by the average value of two picture elements. When the predictive error is equal to or less than a threshold value, a control code (1 bit) from the comparator 45 is brought to "1", since it means that the picture element can be thinned out. On the other hand, when the predictive error exceeds the threshold value, the control code from the comparator 45 is brought to "0", because it means that the interpolation cannot be performed well on the reception side. The ON/OFF of a gate circuit 47 is controlled by this control code. When the control code is "0", the gate circuit 47 is turned on so that original picture element data is output at an output terminal 48, whereas when the control code is "1", the gate circuit 47 is turned off so as not to output the original picture element data at the output terminal 48. In addition, the control code is produced at an output terminal 49 and provided together with subsampled video data as an output.

In this case, the predictive error of each elementary picture element ○ becomes zero, which is equal to or less than a threshold value. However, this elementary picture element is exceptionally treated. It is needless to say that the gate circuit 47 should be controlled so that the elementary picture element data might be taken out at the output terminal 48 through the gate circuit 47.

As mentioned above, the subsampling is done depending on whether or not the predictive error is below a threshold value. More specifically, the transmission/thinning-out is adaptively controlled on a picture-element by picture-element basis rather than a block of picture elements treated as a whole. Also, when the decision is made on whether the thinning-out should be done by obtaining the predictive error, real data is always employed without using interpolation data. For this reason, repeated processing can be avoided, so enabling real-time processing. Needless to say, in the case of a small predictive error, the value of a picture element to be thinned out by be replaced by interpolation data, and this interpolation data may be employed at the time of the decision as to the next predictive error.

As shown in figure 1, the picture element data and the control code taken out at the output terminals 48 and 49 are supplied to the block segmentation circuits 4 and 5, respectively. The block segmentation circuits 4 and 5 convert the sequence of the picture element data and the control code so as to arrange them in block order as shown in figure 2. A clock signal with a block period is supplied to these block segmentation circuits 4 and 5 from a terminal 6. In the sampling pattern indicated in figure 4, broken lines show boundaries corresponding to blocks. As a result, as viewed from each block, the range of the thinning-out rates may extend from (1/16) which allows the transmission of only elementary picture element data per block to (16/16) which allows the transmission of data of all picture elements in a block.

The output data of the block segmentation circuit 4 is supplied to a maximum value and minimum value detector 7 and to a subtractor 10 through a delay circuit 8. Clocks from the terminal 6 are supplied to the maximum value and minimum value detector 7, and a maximum value MAX and a minimum value MIN are detected for each block.

The maximum value MAX and the minimum value MIN are supplied to a subtractor 9, so that the dynamic range DR represented by (MAX-MIN) is provided from the subtractor 9. The minimum value MIN is supplied to the subtractor 10, and picture element date from which the minimum value has been eliminated is produced from the subtractor 10. This picture element data is fed to a digitisation circuit 12. A digitisation step △ is supplied to the digitisation circuit 12 from a digitisation step generator 11, data which is normalised by the elimination of the minimum value is divided by the digitisation step △, and the result of the division is subjected to truncation to eliminate any fractional part of the result, thereby to form a coded data DT. The digitisation step generator 11 and the digitisation circuit 12 need not be composed not only of a division circuit but instead could be a look-up table, eg stored in ROM.

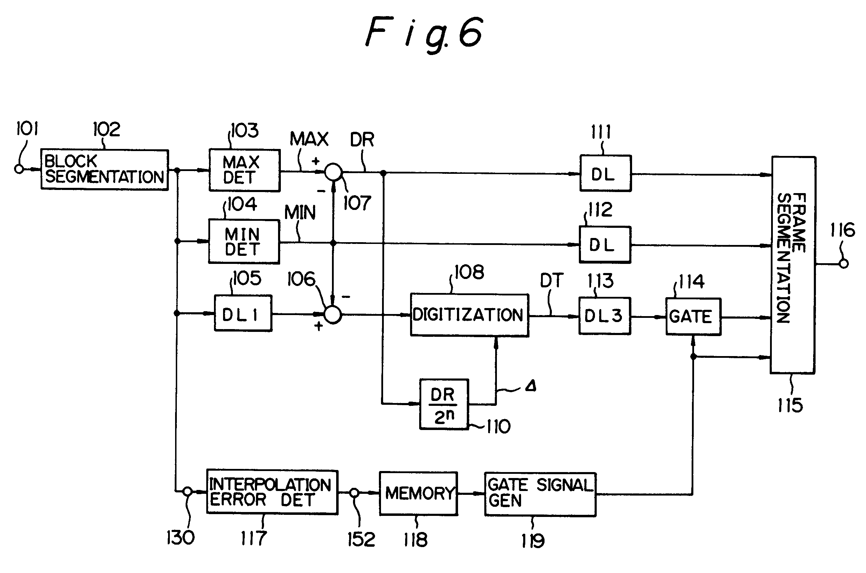

Figure 5 shows the digitisation operation in the case of a digitisation bit number of 2 bits. By dividing the dynamic range DR into (2² = 4), the digitisation step △ is formed. Data from which the minimum value has been eliminated is divided by the digitisation step △, any fractional result is discarded, so providing a two-bit coded data DT. In figure 5, L0 to L3 indicate decoded levels (representative values) corresponding to coded data (00), (01) (10) (11), respectively.

A bit number N is supplied to the digitisation step generator 11 from a bit-number-determining circuit 18. This bit number N is determined corresponding to the thinning-out rate in the subsampling encoder 3. A control code is converted into the order of blocks by the block segmentation circuit 5. The control code from the block segmentation circuit 5 is fed to a "1" separation circuit 15. As described before, a "1" in the control code indicates a thinning-out picture element subject to thinning out.

The separated "1" control code is supplied to a counter 16. The counter 16 is reset by a clock signal from the terminal 6, and, consequently, the number of picture elements to be thinned-out is counted by the counter 16. The count value of the counter 16 is decoded at a decoder 17, and the output of the decoder 17 is supplied to the bit-number-determining circuit 18. The decoder 17 is not always needed. The bit-number-determining circuit 18 is composed of a ROM and determines a digitisation bit number on the basis of the number of picture elements to be thinned out

An example of the correspondence between the number of picture elements to be thinned out and the digitisation bit number N will be shown as described hereunder. In this example, the digitisation of 1 bit to 8 bits is performed, and the total bit number of coded data DT generated in one block does not exceed 26 bits.

Number of picture elements to be thinned out: 15. In this case (number of transmission picture elements: 1), it is not necessary to transmit the coded data DT, since N = 8 or the maximum value MAX and the minimum value MIN are values of elementary picture element data themselves.

Number of picture elements to be thinned out: 14, 13.

In this case number of transmission picture elements is: 2, 3), N = 8.

Number of picture elements to be thinned out: 12.

In this case ( number of transmission picture elements is: 4), N = 6.

Number of picture elements to be thinned out: 11.

In this case (number of transmission picture elements is: 5), N = 5.

Number of picture elements to be thinned out: 10.

In this case (number of transmission picture elements is: 6), N = 4.

Number of picture elements to be thinned out: 9, 8.

In this case (number of transmission picture elements is: 7, 8), N = 3.

Number of picture elements to be thinned out: 7, 6, 5, 4, 3.

In this case (number of transmission picture elements is: 9, 10, 11, 12, 13), N = 2.

Number of picture elements to be thinned out: 2, 1, 0.

In this case (number of transmission picture elements is: 14, 15, 16), N = 1.

The digitisation circuit 12 performs a digitisation by the bit number N determined by this bit-number-determining circuit 18. The control code from the block segmentation circuit 5, the digitisation step △ from the digitisation step generator 11, the minimum value MIN and the coded data DT are supplied to a frame segmentation circuit 13 and converted into transmission data of a frame structure. Encoding of error correction is done at the frame segmentation circuit 13 when necessary. Transmission data is output from an output terminal 14 of the frame segmentation circuit 13.

According to the first embodiment, since no block distortion is generated and since both the subsampling which matches the characteristic of a picture and ADRC which performs compression in the level direction are employed, the compression rate can be increased. Because this embodiment varies the digitisation bit number of the ADRC depending on the degree of the thinning-out of the subsampling, the control can be such that the generated data amount does not exceed the transmission capacity or such that the generated data amount is almost constant.

Now a second embodiment of the present invention will be described hereunder referring to the drawings.

In figure 6, a digital picture signal, for instance, a digital video signal is supplied to an input terminal indicated by 101. The digital video signal has a sampling frequency of 13.5 [MHz] as an example, and one picture element data is represented by an eight bit word.

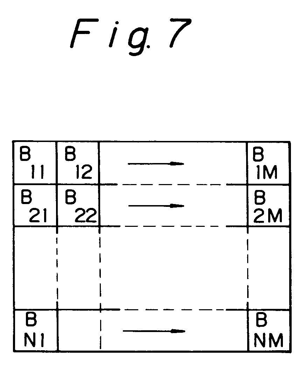

The digital video signal is supplied to a block segmentation circuit 102. The block segmentation circuit 102 divides the picture of one field (or one frame) into a plurality of blocks B11, B12, ..., BNM as shown in figure 7. For instance, each block has a structure of (4 x 4 elements) as described above with reference to figure 2, so one block, contains the data of 16 picture elements. The sequence of data generated from the block segmentation circuit 102 is indicated by an arrow showing the block order in figure 7. In the block, 16 picture elements are transmitted sequentially from a picture element on the left-hand side in a line L1 of figure 2 to those in lines L2, L3, L4.

The output data of the block segmentation circuit 102 is supplied to a maximum value detector 103 and a minimum value detector 104 and to a subtractor 106 through a delay circuit 105. The maximum value MAX and the minimum value MIN are detected for each block by the maximum value detector 103 and the minimum value detector 104.

The maximum value MAX and the minimum value MIN are supplied to a subtractor 107, so that a dynamic range DR represented by (MAX-MIN) is provided from the subtractor 107. The minimum value MIN is supplied to the subtractor 106, and picture element data from which the minimum value has been eliminated is produced from the subtractor 106. This picture element data is fed to a digitisation circuit 108. A digitisation step △ is supplied to the digitisation circuit 108 from a digitisation step generator 110, data which is normalised by the elimination of the minimum value is divided by the digitisation step △, and any fractional result of the division is discarded, thereby to form a coded data DT. The coded data DT has a fixed bit number of 2 bits, for example. The digitisation step generator 110 and the digitisation circuit 108 need not be a division circuit but could instead be a look-up table stored in ROM.

In the case where the bit number n is 2 bits, as shown in figure 5, the dynamic range DR is divided into four level ranges by a digitisation step △ and the two-bit coded data DT is allocated depending on a value of data from which the minimum value is eliminated. A decoded level lies in the centre of the width of the digitisation step, for example.

The dynamic range DR and the minimum value MIN are supplied to a frame segmentation circuit 115 through delay circuits 111 and 112. The coded data DT from the digitisation circuit 108 is given to a gate circuit 114 for subsampling through a delay circuit 113. The delay time DL3 of the delay circuit 113 is set at (4LD + 4SD). A gate signal formed as mentioned later is fed to the gate circuit 114, and the coded data DT is selectively generated from the gate circuit 114. The output signal of the gate circuit 114 is supplied to the frame segmentation circuit 115. The gate signal is a bit map for indicating whether a given element is to be transmitted as is, or subject to thinning-out, and the bit map is supplied to the frame segmentation circuit 115, as well.

The dynamic range DR (8 bits), the minimum value MIN (8 bits), the subsampled coded data (16 x 2 x 1/2 = 16 bits), and bit map (16 bits) are converted into transmission data of a frame structure by the frame segmentation circuit 115. In the frame segmentation circuit 115, encoding of error correction is done as needed. The transmission data is taken out at an output terminal 116 of the frame segmentation circuit 115. The transmission of arbitrary two data items selected from the dynamic range DR, the minimum value MIN, and the maximum value MAX is needed.

Gate signals for controlling the transmission of the coded data generated at the ADRC and the thinning-out are produced depending on the magnitude of the interpolation error. The same interpolation manner as the manner for interpolating data of thinned out picture elements on the reception side is applied to the detection of the interpolation error.

A digital video signal converted into the sequence of blocks is supplied to an interpolation error detector 117 from the block segmentation circuit 102. The interpolation error detected at the interpolation error detector 117 is supplied to a memory 118, and the interpolation errors corresponding to each of 16 picture elements of one block is written into the memory 118. In this case, since one elementary picture element is necessarily sent for every block, the detection and storage of interpolation errors with respect to other picture elements may be carried out. The interpolation error read out of the memory 118 is supplied to a gate signal generator 119.

The gate signal generator 119 specifies 8 picture elements in increasing order of interpolation error size among the supplied 16 interpolation errors. The gate signal generator 119 generates a gate signal to transmit the coded data DT of these 8 picture elements through the gate circuit 114.

The predictive error of each elementary picture element becomes zero, which is the smallest predictive error. However, this elementary picture element is exceptionally treated. It is needless to say that the gate signal generator 119 should be controlled so that the elementary picture element data may pass through the gate circuit 114 when required.

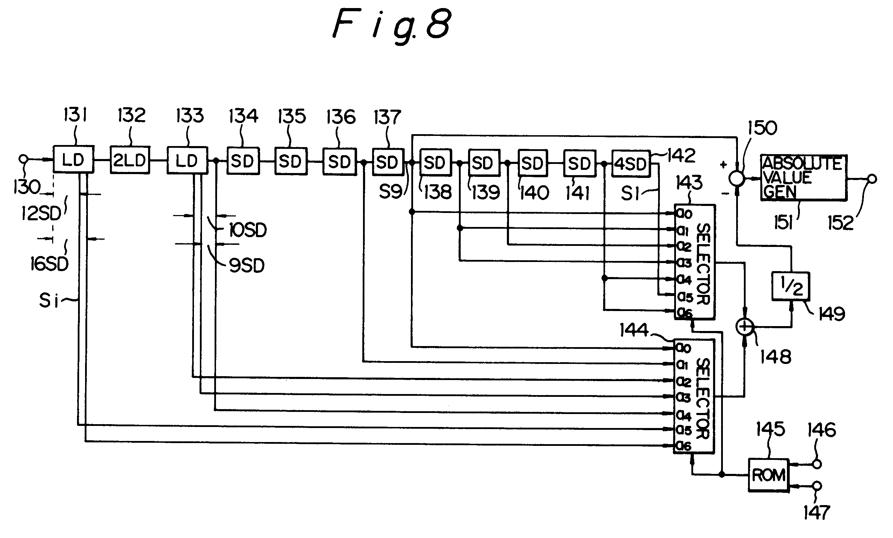

An example of the interpolation error detector 117 is shown in figure 8. Delay circuits 131, 132, 133, 134, 135, 136, 137, 138, 139, 140, 141, 142 are connected in a serial chain to an input terminal 130 supplied with the digital video signal from the block segmentation circuit 102. The delay circuits 131 and 133 are line delay circuits and have a delay time of one line, as indicated by LD. The delay circuit 132 has a delay time of 2LD. The delay circuits 134 to 141 have a delay time of a sampling period, as indicated by SD. The delay circuit 142 has a delay amount of 4SD.

The arrangement of picture elements of one block is the same as shown in figure 4. The interpolation method used differs for individual picture elements, as mentioned above. In the foregoing description of the first embodiment, the digital video signal is a signal before block segmentation. However, in this embodiment, since the picture element data which has already been block segmented is used, the time interval between each picture element is different from that in the foregoing description. Namely, in figure 4, the time interval between S1 and S5 is shown to be delay time LD of one line, while in this embodiment the time interval between S1 and S5 is 4SD, ie, four sampling periods.

Predetermined output signals of the delay circuits 131 to 142 are supplied respectively to first to seventh input terminals a0-a6 of selectors 143 and 144, which are provided to extract the data of two picture elements used for a calculation of an interpolation value. The selectors 143 and 144 are controlled by a selector control signal from a ROM 145. A sampling clock with a frequency corresponding to the sampling period and a block clock with a frequency corresponding to the block period and which are in synchronism with the output signal of the block segmentation circuit 102 are supplied to the ROM 145 from terminals 146 and 147, respectively.

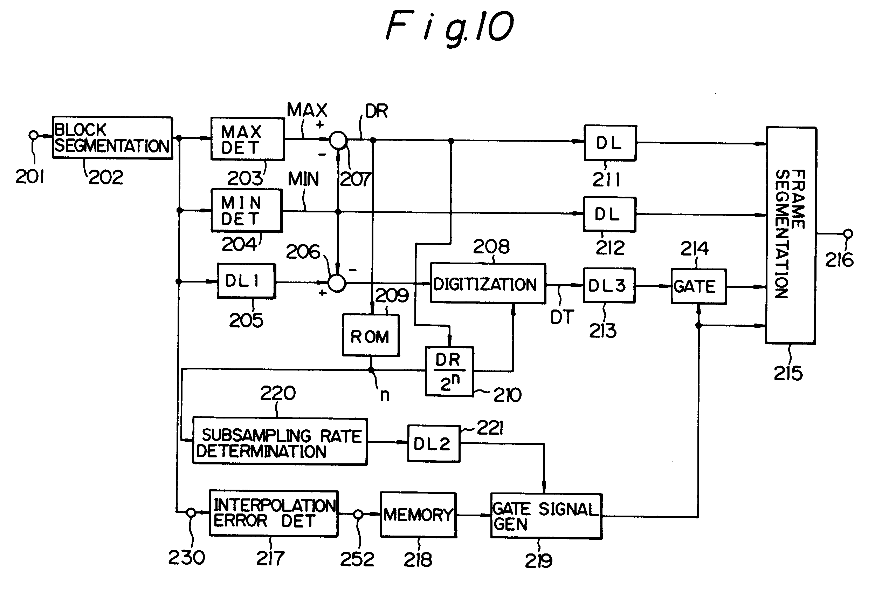

Figure 9 shows an example of the ROM 145, and 153 is an address counter of the ROM 145. At the ROM 145 three-bit selector control signals are stored corresponding to each of the positions of picture elements S1 to S16 of one block. However, for simplicity in figure 9, three bits of (000), (001), (010), ... (110) are made to 0, 1, 2, ... 6. When the selector control signal is 0, the selectors 143 and 144 selectively produce data supplied to their input terminal a0. Similarly, the selectors 143 and 144 selectively provide data given to input terminals a1 to a6 depending on 1 to 6 of the selector control signal.

As is understood from the selector control signals from the ROM 145 shown in figure 9, when each picture element in a block is a subject picture element, ie, when data of the subject picture element is generated on the output side of the delay circuit 137, these selectors 143 and 144 selectively produce two picture element data for forming an interpolation value.

The two picture element data taken out of the selectors 143 and 144 are supplied to an adder 148, the output signal of the adder 148 is supplied to a 1/2 multiplication circuit 149, and the interpolation value is output from the 1/2 multiplication circuit 149. This interpolation value is fed to a subtractor 150. Data of a subject picture element taken out of the junction of the delay circuits 137 and 138 is supplied as the other input signal of the subtractor 150. As a result, a difference between the real value and the interpolation value is produced as the output signal of the subtractor 150, and this difference is supplied to an absolute value generating circuit 151. An interpolation error from the absolute value generating circuit 151 is taken out from an input terminal 152. This interpolation error is supplied to the memory 118 as shown in figure 6, and interpolation errors of one block are stored at the memory 118.

The two picture element data selected by the selectors 143 and 144, respectively, when each of picture elements S1 to S16 indicated in figure 4 is a subject picture element, is set forth below.

When the picture element S1 is a subject picture element, the selector control signal "0" is produced. The selectors 143 and 144 selectively output data of the subject picture element which is supplied to input terminals a1 for the output side of the delay circuit 137. The picture element S1 is the elementary picture element which is necessarily transmitted, so that the interpolation error is always zero.

When the picture element S2 is a subject picture element, the selector control signal "1" is produced. Data of the picture element S1, which is the picture element one sampling period (1SD) previous to the current one, is supplied to an input terminal a1 of the selector 143 from the delay circuit 138, and the picture element S3, which is the picture element 1SD after the picture element S2, is supplied to an input terminal a1 of the selector 144 from the output side of the delay circuit 136. As a result, data of these two picture elements S1 and S3 are selected by the selectors 143 and 144, respectively.

When the picture element S3 is a subject picture element, the selector control signal "2" is generated. Data of the picture element S1, which is the picture element 2SD previous to the picture element S3 is supplied to an input terminal a2 of the selector 143 from the delay circuit 139, while the picture element S17 14SD after the picture element S3 is supplied to an input terminal a2 of the selector 144 from the intermediate stage of the delay circuit 133. A delay of 4SD is generated by the delay circuits 134, 135, 136, 137 and in the intermediate stage of the delay circuit 133, a delay of 10SD is generated on the output side of the delay circuit 133. As a result, data of these two picture elements S1 and S17 are selected by the selectors 143 and 144, respectively.

In the case where the picture element S4 is a subject picture element, the selector control signal "3" is produced. Data of the picture element S3 1SD prior to S4 is supplied from the delay circuit 138 to an input terminal a3 of the selector 143, while the picture element S17 13SD after S4 is applied to an input terminal a3 of the selector 144 from the intermediate stage of the delay circuit 133. A delay of 4SD is generated by the delay circuits 134, 135, 136 and 137, while a delay of 9SD with respect to the output side of the delay circuit 133 is produced in the intermediate stage of the delay circuit 133. Data of these two picture elements S3 and S17 are selected by the selectors 143 and 144, respectively.

When the picture element S5 is a subject picture element, the selector control signal "4" is produced. Data of the picture element S1 4SD prior to S5 is supplied to an input terminal a4 of the selector 143 from the delay circuit 141, while the picture element S9 4SD after the picture element S5 is supplied to an input terminal a4 of the selector 144 from the output side of the delay circuit 133. As a result, data of these two picture elements S1 and S9 are selected by the selectors 143 and 144, respectively.

In the case where the picture element S6 is a subject picture element, the selector control signal "1" is generated. Data of the picture element S5 1SD prior to S6 is supplied to the input terminal a1 of the selector 143 from the delay circuit 138, while the picture element S7 1SD after the picture element S6 is supplied to the input terminal a1 of the selector 144. Consequently, data of these two picture elements S5 and S7 are selected by the selectors 143 and 144, respectively.

When the picture element S7 is a subject picture element,, the selector control signal "4" is produced. Data of the picture element S3 4SD prior to S7 is supplied to an input terminal a4 of the selector 143 from the delay circuit 141, while the picture element S11 4SD after S7 is supplied to an input terminal a4 of the selector 144 from the output side of the delay circuit 133. Therefore, data of these two picture elements S3 and S11 are selected by the selectors 143 and 144, respectively.

When the picture element S8 is a subject picture element, the selector control signal "3" is generated. Data of the picture element S7 1SD prior to S8 is supplied to an input terminal a3 of the selector 143 from the delay circuit 138, while the picture element S21 13SD after picture element S8 has been given to an input terminal a3 of the selector 144 from the intermediate stage of the delay circuit 133. Consequently, data of these two picture elements S7 and S21 are selected by the selectors 143 and 144, respectively.

In the case where the picture element S9 is a subject picture element, the selector control signal "5" is generated. As shown in figure 8, data of the picture element S1 8SD prior to S9 is supplied to an input terminal a5 of the selector 143 from the delay circuit 142, while data of a picture element Si 4LD-8SD after S9 is supplied to an input terminal a5 of the selector 144. In a block lying below the block shown in figure 4, the position of a picture element 4LD after the picture element S9 is a picture element (not shown) corresponding to the picture element S9. With respect to this picture element, the picture element Si is before 8SD. A delay of 4LD is generated by the delay circuits 131, 132, 133. Further, a delay of 4SD is produced by the delay circuits 134, 135, 136, 137. As a consequence, an output signal from the positions of -12SD with respect to the input side of the delay circuit 131 is supplied to the input terminal a5 of the selector 144. The selectors 143 and 144 select data of the picture elements S1 and Si, respectively.

When the picture element S10 is a subject picture element, the selector control signal "1" is produced. To the input terminal a1 of the selector 143 is supplied the data of the picture element S9 1SD prior to S10 from the delay circuit 138, while to the input terminal a1 of the selector 144 is supplied with the picture element S11 1SD after the picture element S10. Therefore, data of these two picture elements S9 and S11 are selected by the selectors 143 and 144, respectively.

In the case where the picture element S11 is a subject picture element, the selector control signal "2" is generated. Data of the picture element S9 2SD prior to the picture element S11 is supplied to the input terminal a2 of the selector 143 from the delay circuit 139, while the picture element S25 14SD after the picture element S11 is supplied to the input terminal a2 of the selector 144 from the intermediate stage of the delay circuit 133. As a result, data of these two picture elements S9 and S25 are selected by the selectors 143 and 144, respectively.

When the picture element S12 is a subject picture element , the selector control signal "3" is produced. Data of the picture element S11 1SD prior to S12 is supplied to the input terminal a3 of the selector 143 from the delay circuit 138, while the picture element S25 13SD after the picture element S12 has supplied to the input terminal a3 of the selector 144 from the intermediate stage of the delay circuit 133. As a consequence, data of these two picture elements S11 and S25 are selected by the selectors 143 and 144, respectively.

In the case where the picture element S13 is a subject picture element, the selector control signal "6" is produced. Data of the picture element S9 4SD prior to S13 is supplied to the input terminal a6 of the selector 143 from the delay circuit 141, while data of the picture element Si (4LD-12SD) after S13 is supplied to an input terminal a6 of the selector 144. In the block lying below the block shown in figure 4, the position of a picture element 4LD after S13 is a picture element (not shown) corresponding to the picture element S13. With respect to this picture element, the picture element Si is 12SD ahead. A delay of 4LD is generated by the delay circuits 131, 132, 133 and a delay of 4SD is produced by the delay circuits 134, 135, 136, 137. As a result, an output signal from the positions of -16SD with respect to the input side of the delay circuit 131 is supplied to the input terminal a6 of the selector 144. Data of these picture elements S9 and Si are selected by the selectors 143 and 144, respectively.

When the picture element S14 is a subject picture element, the selector control signal "1" is generated. Data of the picture element S13 1SD prior to S14 is supplied to the input terminal a1 of the selector 143 from the delay circuit 138, while the picture element S15 1SD after the picture element S14 is supplied to the input terminal a1 of the selector 144. As a result, data of these two picture elements S13 and S15 are selected by the selectors 143 and 144, respectively.

In the case where the picture element S15 is a subject picture element, the selector control signal "6" is generated. Data of the picture element S11 4SD prior to S15 is supplied to the input terminal a6 of the selector 143 from the delay circuit 141, while data of the picture element Sk (4LD-12SD) after S15 is supplied to the input terminal a6 of the selector 144 from the position of -16SD with respect to the input side of the delay circuit 131. Data of these two picture elements S11 and Sk are selected by the selectors 143 and 144, respectively.

When the picture element S16 is a subject picture element, the selector control signal "3" is produced. Data of the picture element S15 1SD prior to S16 is supplied to the input terminal a3 of the selector 143 from the delay circuit 138, while a picture element S29 13SD after the picture element S16 is supplied to the input terminal a3 of the selector 144 from the intermediate stage of the delay circuit 133. Therefore, data of these two picture elements S15 and S29 are selected by the selectors 143 and 144, respectively.

The second embodiment permits the storage of block-segmented data into a buffer memory and the read-out of data necessary for obtaining interpolation errors from the buffer memory.

In addition, for detection of interpolation error, data with the minimum value eliminated from the subtractor 106 or the coded data DT from the digitisation circuit 108 may be employed. Further, a local decoder of the ADRC may be provided to detect the interpolation error from an ADRC decoded value.

As the interpolation method, not only the average value of two picture elements but also the average value of data of four peripheral picture elements may be used.

As the second embodiment, uses both the subsampling which matches a characteristic of a picture and the aDRC which performs a compression in the level direction, the compression rate can be elevated. Since the digitisation bit number is fixed and the thinning-out rate of the subsampling is fixed, the generated data amount can be controlled to be almost constant. As a result, it is efficient to apply the invention to a transmission path such as a digital VTR in which the generated data amount is required so as not to exceed a transmission capacity. Further, since the transmission and the judgement of the thinning-out is made depending on the amplitude of an interpolation error, the quality of a reproduced picture can be kept excellent.

A third embodiment of the present invention will now be described referring to the drawings.

Figure 10 shows the third embodiment of the present invention, and in figure 10, a digital picture signal, for instance, a digital video signal is supplied to an input terminal indicated by 201. The digital video signal has a sampling frequency of 13.5 [MHz] as an example, and one picture element data is represented by an eight bit word.

The digital video signal is supplied to a block segmentation circuit 202. The block segmentation circuit 202 divides a picture of one field (or one frame) into a plurality of blocks B11, B12, ..., BNM as shown in figure 7. Each block has a structure of (4 x 4) as shown in figure 2, so that one block contains data of 16 picture element data. The sequence of data generated from the block segmentation circuit 202 is indicated by an arrow showing the block order in figure 7. In the block, 16 picture elements are transmitted sequentially from a picture element on the left hand side in a line L1 of figure 2 to those in lines L2, L3, L4.

The output data of the block segmentation circuit 202 is supplied to a maximum value detector 203 and a minimum value detector 204 and to a subtractor 206 through a delay circuit 205. The maximum value MAX and the minimum value MIN are detected for each block by the maximum value detector 203 and the minimum value detector 204.

The maximum value MAX and the minimum value MIN are supplied to a subtractor 207, so that a dynamic range DR represented by (MAX-MIN) is provided from the subtractor 207. The minimum value MIN is supplied to the subtractor 207. The minimum value MIN is supplied to the subtractor 206, and picture element data from which the minimum value has been eliminated is produced from the subtractor 206. This picture element data is fed to a digitisation circuit 208. A digitisation step is supplied to the digitisation circuit 208 from a digitisation step generator 210, data which is normalised by the elimination of the minimum value is divided by the digitisation step, and any fractional result of the division is discarded to form a coded data DT.

The coded data DT has a variable bit number of 1, 2, 3 or 4 bits, for example. This bit number is determined depending on a dynamic range DR. The dynamic range DR is supplied to a ROM 209, and data with a bit number n is generated from the ROM 209. The bit number n is supplied to the digitisation step generator 210 to set a digitisation step. The digitisation step generator 210 and the digitisation circuit 208 may be composed not only of a division circuit but also of a look-up table, eg, in ROM.

The larger the dynamic range DR, the larger the bit number n. For instance, (n = 1) is established when the dynamic range DR is small, and the digitisation is performed by a digitisation step indicated △1. When the dynamic range DR is larger, (n = 2) is established to perform the digitisation step indicated by △2. A non-linear digitisation of ( △1 = △2) is done. A table for showing the relationship between the dynamic range DR and the bit number n is stored into the ROM 209. A decoded level lies in the centre of the width of the digitisation step, for example.

The dynamic range DR and the minimum value MIN are supplied to a frame segmentation circuit 215 through delay circuits 211 and 212. The coded data DT from the digitisation circuit 208 is given to a gate circuit 214 for subsampling through a delay circuit 213. A delay DL3 of the delay circuit 213 is set at (4LD + 4SD). A gate signal formed as mentioned later is fed to the gate circuit 214, and the coded data DT is selectively generated from the gate circuit 214. The output signal of the gate circuit 214 is supplied to the frame segmentation circuit 215. The gate signal is a bit map for indicating which picture elements are to transmitted and which thinned out, and the bit map is supplied to the frame segmentation circuit 215, also.

The dynamic range DR (8 bits), the minimum value MIN (8 bits), the subsampled coded data (15 or 16 bits), and bit map (16 bits) are converted into transmission data of a frame structure by the frame segmentation circuit 215. At the frame segmentation circuit 215, encoding of error correction is done as needed. The transmission data is output from an output terminal 216 of the frame segmentation circuit 215. An arbitrary selection of two items among the dynamic range DR, the minimum value MIN, and the maximum value MAX is needed.

Gate signals for controlling the transmission of the coded data generated at the ADRC and the thinning-out are produced depending on the digitisation bit number n and the magnitude of the interpolation error. The same interpolation manner as the manner for interpolating data of thinned out picture elements on the reception side is applied to the detection of the interpolation error.

A digital video signal converted into the sequence of blocks is supplied to an interpolation error detector 217 from the block segmentation circuit 202. The interpolation error detected at the interpolation error detector 217 is supplied to a memory 218, and the interpolation errors corresponding to each of 16 picture elements of one block is stored into the memory 218. In this case, since one elementary picture element is necessarily transmitted for every block, the detection and storage of interpolation errors with respect to other picture elements may be carried out. The interpolation error read out of the memory 218 is supplied to a gate signal generator 219.

Information on the thinning-out rate generated at a subsampling rate determining circuit 20 is given to the gate signal generator 219 through a delay circuit 221. The total delay of a delay DL2 of the delay circuit 221 and the delay DL1 of the above mentioned delay circuit 205 is selected at (4LD - 8SD). The subsampling rate determining circuit 220 determines the thinning-out rate depending on the bit number n. The thinning-out rate (the number of transmission picture elements ÷ the number of picture elements of one block) in the case of (n=1) is selected at 1, the thinning-out rate in the case of (n=2) is selected at 1/2, the thinning-out rate in the case of (n=3) is selected at 1/3, and the thinning-out rate in the case of (n=4) is selected at 1/4. In this example, since the number of picture elements of one block is 16, the number of transmission picture elements is made 5 in the case of a thinning-out rate of 1/3. As a result, the total of the bit number of coded data generated in one block is almost constant (15 bits or 16 bits).

The gate signal generator 219 generates a gate signal so that picture element data of the number specified by the above described thinning-out rate which is sequentially selected in increasing order of interpolation errors passes the gate circuit 214. Needless to say, in the case of the thinning-out rate of 1, all picture element data in a block is transmitted through the gate circuit 214.

In this case, the predictive error of each elementary picture element ○ becomes zero, which is the smallest predictive error. However, this elementary picture element is exceptionally treated. It is needless to say that the gate signal generator 219 should be controlled so that the elementary picture element data can pass preferentially though the gate circuit 214.

The interpolation error detector 217 might have the same construction as the one shown in figure 8 and its operation is as mentioned above.

As the third embodiment uses both the subsampling which matches a characteristic of a picture and the ADRC which performs a compression in the level direction, the compression rate can be elevated. Since this embodiment varies the degree of the thinning-out of the subsampling depending of the digitisation bit number of the ADRC, the control can be such that the generated data amount is almost constant. As a result, it is efficient to apply this embodiment to a transmission path such as a digital VTR in which the generated data amount is required so as not to exceed a certain transmission capacity.

Having described a specific preferred embodiment of the present invention with reference to the accompanying drawings, it is to be understood that the invention is not limited to that precise embodiment, and that various changes and modifications may be effected therein by one skilled in the art without departing from the scope of the invention as defined in the appended claims.

## Claims

1. A highly efficient coding apparatus for coding digital video data in a format composed of blocks of digital video data representing plural picture elements and allowing compression of the video data, comprising:
means for receiving (3) the digital video data represented by respective picture element data having a first predetermined number of bits per element,
first and second detecting means (7) for detecting maximum and minimum values, respectively of the output of said receiving means in each of said blocks,
means for generating dynamic range (9) information for each said block from said maximum and minimum values for the respective block,
transmitting means for transmitting at least coded data and flag data,
characterised in that said receiving means includes:
means for designating at least one picture element for each of said blocks as an elementary picture element (S1),
means for predicting values (21-42) of respective ones of subject picture element data,
means for detecting respective predictive errors (43, 44) of the predicted values from the real values of the picture element data,
means for determining (45, 46) if each predictive error is greater than a threshold value,
means for generating said flag data (45) by the output of said determining means,
means for gating (47) said elementary picture element data and the subject picture element data for which the respective predictive errors are greater then the threshold value and for providing said output of said receiving means,
and in that the apparatus further comprises
means for generating modified digital video data (10) for each said block as the difference between each of the output data of said gating means and one of said maximum and minimum values for said respective block,
means for encoding said modified digital video data (12) with a variable digitised bit number determined by said flag data for said respective block so as to provide said coded data in the form of coded data of variable bit length, whereby the data amount of said coded data for each said respective block can be maintained substantially constant.

2. A highly efficient coding apparatus for coding digital video data in a format composed of blocks of digital video data representing plural picture elements and allowing compression of the video data, comprising:
first (103) and second (104) detecting means for detecting maximum and minimum values, respectively of the digital video data representing the plural picture elements in each of said blocks,
means for generating dynamic range information (107) for each said block from said maximum and minimum values for the respective block,
means for generating modified digital video data (106) for each said block, the apparatus being characterised in that said means for generating modified digital video data uses the difference between each of the digital video data and one of said maximum and minimum values for said respective block, and in that it further comprises:
means for encoding (108) said modified digital video data with a fixed digitised bit number less than the original digitised bit number so as to provide coded data of reduced bit length,
means for determining at least one elementary picture element for each of said blocks,
means for predicting values (117) of respective ones of subject picture element data,
means for detecting respective predictive errors (117) of the predicted values from the real value of the subject picture element data,
means for selecting (119) a fixed number of subject picture elements for the respective block, the predictive errors of which are greater than those of remaining subject picture elements in said block and for generating selection data identifying selected subject picture elements, and
transmitting means for transmitting at least the coded data of said elementary picture elements and selected subject picture elements and said selection data.

3. A highly efficient coding apparatus for coding digital video data in a format composed of blocks of digital video data representing plural picture elements and allowing compression of the video data, comprising:
first (203) and second (204) detecting means for detecting maximum and minimum values, respectively of the digital video data representing the plural picture elements in each of said blocks,
means for generating dynamic range information (207) for each said block from said maximum and minimum values for the respective block,
means for generating modified digital video data for each said block, the apparatus being characterised in that said means for generating modified digital video data uses the difference between each of the digital video data and one of said maximum and minimum values for said respective block, and in that it further comprises:
means for encoding (208) said modified digital video data with a variable digitised bit number determined by said dynamic range information so as to provide coded data of variable bit length,
means for determining at least one elementary picture element for each of said blocks,
means for predicting values (217) of respective ones of subject picture element data,
means for detecting respective predictive errors (217) of the predicted values from the real value of the subject picture element data,
means for selecting (209, 219-221) subject picture elements for the respective block, the predictive errors of which are greater than those of remaining subject picture elements in said block, the number of the selected subject picture elements being dependent on the digitised bit number, said selecting means generating selection data identifying selected subject picture elements, and
transmitting means for transmitting the coded data of said elementary picture elements and said selected subject picture elements and said selection data.

## Patentansprüche

1. Hochwirksame Codiervorrichtung zur Codierung von digitalen Videodaten in einem Format, das aus Blöcken von digitalen Videodaten besteht, die mehrere Bildelemente darstellen, und zum Zulassen einer Kompression der Videodaten, mit:
einer Einrichtung (3) zum Empfang der digitalen Videodaten, die durch entsprechende Bildelementedaten repräsentiert werden, die eine erste vorgegebene Anzahl von Bits pro Element haben,
einer ersten und zweiten Ermittlungseinrichtung (7) zur Ermittlung der Maximal- und Minimalwerte entsprechend dem Ausgangssignal der Empfangseinrichtung in jedem der Blöcke,
einer Einrichtung (9) zur Erzeugung einer Information eines dynamischen Bereichs für jeden Block aus den Maximal- und Minimalwerten für den entsprechenden Block,
einer Übertragungseinrichtung zur Übertragung zumindest von codierten Daten und Flag-Daten,
dadurch gekennzeichnet, daß die Empfangseinrichtung aufweist:
eine Einrichtung zur Bestimmung zumindest eines Bildelements für jeden der Blöcke als elementares Bildelement (S1),
eine Einrichtung (21 - 42) zur Vorhersage von Werten von entsprechenden Daten der Gegenstandsbildelementedaten,
eine Einrichtung (43,44) zum Ermitteln entsprechender vorhersagbarer Fehler der vorhergesagten Werte aus den realen Werten der Bildelementedaten,
eine Bestimmungseinrichtung (45, 46), ob jeder vorhersagbare Fehler größer als ein Schwellenwert ist,
eine Einrichtung (45) zur Erzeugung der Flag-Daten durch das Ausgangssignal der Ermittlungseinrichtung,
eine Einrichtung (47) zum Ausfiltern der elementaren Bildelementedaten und der Gegenstandsbildelementedaten, für die die entsprechenden vorhersagbaren Fehler größer als der Schwellenwert sind, und zum Bereitstellen des Ausgangssignals der Empfangseinrichtung,
und daß die Vorrichtung weiter aufweist,
eine Einrichtung (10) zur Erzeugung von modifizierten digitalen Videodaten für jeden Block als die Differenz zwischen jedem der Ausgangsdatenwörter der Ausfilter-Einrichtung und einem der Maximal- und Minimalwerte für den entsprechenden Block,
eine Einrichtung (12) zur Codierung der modifizierten digitalen Videodaten mit einer variablen digitalisierten Bitanzahl, die durch die Flag-Daten für den entsprechenden Block bestimmt ist, um die codierten Daten in der Form von codierten Daten einer variablen Bitlänge bereitzustellen, wodurch die Datenmenge der codierten Daten für jeden entsprechenden Block im wesentlichen konstant beibehalten werden kann.

2. Hochwirksame Codiervorrichtung zur Codierung digitaler Videodaten in einem Format, das aus Blöcken von digitalen Videodaten besteht, die mehrere Bildelemente darstellen, und zum Zulassen einer Kompression der Videodaten, mit:
einer ersten (103) und zweiten (104) Ermittlungseinrichtung zur Ermittlung der Maximal- und Minimalwerte entsprechend den digitalen Videodaten, die die Bildelemente in jedem der Blöcke darstellen,
einer Einrichtung (107) zur Erzeugung einer Information eines dynamischen Bereichs für jeden Block aus den Maximal- und Minimalwerten für den entsprechenden Block,
einer Einrichtung (106) zur Erzeugung modifizierter digitaler Videodaten für jeden Block,
wobei die Vorrichtung dadurch gekennzeichnet ist, daß die Einrichtung zur Erzeugung von modifizierten digitalen Videodaten die Differenz zwischen jedem der digitalen Videodaten und einem der Maximal- und Minimalwerte für den entsprechenden Block verwendet, und daß sie weiter aufweist:
eine Einrichtung (108) zur Codierung der modifizierten digitalen Videodaten, wobei eine feste digitalisierte Bitanzahl kleiner als die ursprüngliche digitale Bitanzahl ist, um codierte Daten einer reduzierten Bitlänge bereitzustellen,
eine Einrichtung zur Bestimmung zumindest eines elementaren Bildelementes für jeden der Blöcke,
eine Einrichtung (117) zur Vorhersage von Werten der entsprechenden Daten der Gegenstandsbildelementedaten,
eine Einrichtung (117) zur Ermittlung von entsprechenden vorhersagbaren Fehlern der vorhergesagten Werte aus dem realen Wert der Gegenstandsbildelementedaten,
eine Einrichtung (119) zur Auswahl einer festen Anzahl von Gegenstandsbildelementen für den entsprechenden Block, dessen vorhersagbare Fehler größer als die verbleibenden Gegenstandsbildelemente in diesem Block sind, und zur Erzeugung von Auswahldaten, die ausgewählte Gegenstandsbildelemente identifizieren, und
eine Übertragungseinrichtung zur Übertragung zumindest der codierten Daten der elementaren Bildelemente, der ausgewählten Gegenstandsbildelemente und der Auswahldaten.

3. Hochwirksame Codiervorrichtung zur Codierung von digitalen Videodaten in einem Format, das aus Blöcken von digitalen Videodaten besteht, die mehrere Bildelemente darstellen und zum Zulassen einer Kompression der Videodaten, mit:
einer ersten (203) und zweiten (204) Ermittlungseinrichtung zur Ermittlung von Maximal- und Minimalwerten entsprechend den digitalen Videodaten, die die Bildelemente in jedem der Blöcke darstellen,
einer Einrichtung (207) zur Erzeugung einer Information eines dynamischen Bereichs für jeden Block aus den Maximal- und Minimalwerten für den entsprechenden Block,
einer Einrichtung zur Erzeugung von modifizierten digitalen Videodaten für jeden Block,
wobei die Vorrichtung dadurch gekennzeichnet ist, daß die Einrichtung zur Erzeugung von modifizierten digitalen Videodaten die Differenz zwischen jedem der digitalen Videodatenwörter und einem der Maximal- und Minimalwerte für den entsprechenden Block verwendet, und daß sie weiter aufweist:
eine Einrichtung (208) zur Codierung der modifizierten digitalen Videodaten mit einer variablen digitalisierten Bitanzahl, die durch die Information des dynamischen Bereichs bestimmt wird, um damit codierte Daten einer variablen Bitlänge bereitzustellen,
eine Einrichtung zur Ermittlung zumindest eines elementaren Bildelementes für jeden der Blöcke,
eine Einrichtung (217) zur Vorhersage von Werten von entsprechenden Daten der Gegenstandsbildelementedaten,
eine Einrichtung (217) zur Ermittlung entsprechender vorhersagbarer Fehler der vorhergesagten Werte aus dem realen Wert der Gegenstandsbildelementedaten,
eine Einrichtung zur Auswahl (209, 219 - 221) von Gegenstandsbildelementen für den entsprechenden Block, dessen vorhersagbare Fehler größer als die von verbleibenden Gegenstandsbildelementen in diesem Block sind, wobei die Anzahl der ausgewählten Gegenstandsbildelemente von der digitalisierten Bitanzahl abhängig ist, wobei die Auswahleinrichtung Auswahldaten erzeugt, die ausgewählte Gegenstandsbildelemente identifiziert, und
eine Übertragungseinrichtung zur Übertragung der codierten Daten der elementaren Bildelemente, der ausgewählten Gegenstandsbildelemente und der Auswahldaten.

## Revendications

1. Appareil de codage hautement efficient pour coder des données vidéo numériques selon un format constitué par des blocs de données vidéo numériques représentant plusieurs éléments d'image et permettant une compression des données vidéo, comprenant :
un moyen pour recevoir (3) les données vidéo numériques représentées par des données d'élément d'image respectives comportant un premier nombre prédéterminé de bits par élément ;
des premier et second moyens de détection (7) pour détecter respectivement des valeurs maximum et minimum de la sortie dudit moyen de réception dans chacun desdits blocs ;
un moyen pour générer une information de plage dynamique (9) pour chaque dit bloc à partir desdites valeurs maximum et minimum pour le bloc respectif ;
un moyen d'émission pour émettre au moins des données codées et des données d'indicateur,
caractérisé en ce que ledit moyen de réception inclut :
un moyen pour désigner au moins un élément d'image pour chacun desdits blocs en tant qu'élément d'image élémentaire (S1) ;
un moyen pour prédire des valeurs (21-42) de certaines respectives de données d'élément d'image sujet ;
un moyen pour détecter des erreurs de prédiction respectives (43, 44) des valeurs prédites à partir des valeurs réelles des données d'élément d'image ;
un moyen pour déterminer (45, 46) si chaque erreur de prédiction est supérieure à une valeur de seuil ;
un moyen pour générer lesdites données d'indicateur (45) au moyen de la sortie dudit moyen de détermination ;
un moyen pour soumettre à une logique de porte (47) lesdites données d'élément d'image élémentaire et les données d'élément d'image sujet pour lesquelles les erreurs de prédiction respectives sont supérieures à la valeur de seuil et pour produire ladite sortie dudit moyen de réception, et en ce que
l'appareil comprend en outre :
un moyen pour générer des données vidéo numériques modifiées (10) pour chaque dit bloc en tant que différence entre chacune des données de sortie dudit moyen de soumission à une logique de porte et l'une desdites valeurs maximum et minimum pour ledit bloc respectif ;
un moyen pour coder lesdites données vidéo numériques modifiées (12) avec un nombre de bits numérisé variable déterminé par lesdites données d'indicateur pour ledit bloc respectif de manière à produire lesdites données codées sous la forme de données codées présentant une longueur binaire variable de telle sorte que la quantité de données desdites données codées pour chaque dit bloc respectif puisse être maintenue sensiblement constante.

2. Appareil de codage hautement efficient pour coder des données vidéo numériques selon un format constitué par des blocs de données vidéo numériques représentant plusieurs éléments d'image et permettant une compression des données vidéo, comprenant :
des premier (103) et second (104) moyens de détection pour détecter respectivement des valeurs maximum et minimum des données vidéo numériques représentant les plusieurs éléments d'image dans chacun desdits blocs ;
un moyen pour générer une information de plage dynamique (107) pour chaque dit bloc à partir desdites valeurs maximum et minimum pour le bloc respectif ;
un moyen pour générer des données vidéo numériques modifiées (106) pour chaque dit bloc, l'appareil étant caractérisé en ce que ledit moyen pour générer des données vidéo numériques modifiées utilise la différence entre chacune des données vidéo numériques et l'une desdites valeurs maximum et minimum pour ledit bloc respectif, et en ce que
l'appareil comprend en outre :
un moyen pour coder (108) lesdites données vidéo numériques modifiées avec un nombre de bits numérisé fixe inférieur au nombre de bits numérisé original de manière à produire des données codées présentant une longueur binaire réduite ;
un moyen pour déterminer au moins un élément d'image élémentaire pour chacun desdits blocs ;
un moyen pour prédire des valeurs (117) de certaines respectives de données d'élément d'image sujet ;
un moyen pour détecter des erreurs de prédiction respectives (117) des valeurs prédites à partir de la valeur réelle des données d'élément d'image sujet ;
un moyen pour sélectionner (119) un nombre fixe d'éléments d'image sujet pour le bloc respectif dont les erreurs de prédiction sont supérieures à celles d'éléments d'image sujet restants dans ledit bloc et pour générer des données de sélection identifiant des éléments d'image sujet sélectionnés ; et
un moyen d'émission pour émettre au moins les données codées desdits éléments d'image élémentaire et desdits éléments d'image sujet sélectionnés et lesdites données de sélection.

3. Appareil de codage hautement efficient pour coder des données vidéo numériques selon un format constitué par des blocs de données vidéo numériques représentant plusieurs éléments d'image et pour permettre une compression des données vidéo, comprenant :
des premier (203) et second (204) moyens de détection pour détecter respectivement des valeurs maximum et minimum des données vidéo numériques représentant les plusieurs éléments d'image dans chacun desdits blocs ;
un moyen pour générer une information de plage dynamique (207) pour chaque dit bloc à partir desdites valeurs maximum et minimum pour le bloc respectif ;
un moyen pour générer des données vidéo numériques modifiées pour chaque dit bloc, l'appareil étant caractérisé en ce que ledit moyen pour générer des données vidéo numériques modifiées utilise la différence entre chacune des données vidéo numériques et l'une desdites valeurs maximum et minimum pour ledit bloc respectif, et en ce que
l'appareil comprend en outre :
un moyen pour coder (208) lesdites données vidéo numériques modifiées moyennant un nombre de bits numérisé variable déterminé par ladite information de plage dynamique de manière à produire des données codées présentant une longueur binaire variable ;
un moyen pour déterminer au moins un élément d'image élémentaire pour chacun desdits blocs ;
un moyen pour prédire les valeurs (217) de certaines respectives des données d'élément d'image sujet ;
un moyen pour détecter des erreurs de prédiction respectives (217) des valeurs prédites à partir de la valeur réelle des données d'élément d'image sujet ;
un moyen pour sélectionner (209, 219-221) des éléments d'image sujet pour le bloc respectif dont les erreurs de prédiction sont supérieures à celles d'éléments d'image sujet restants dans ledit bloc, le nombre d'éléments d'image sujet sélectionnés dépendant du nombre de bits numérisé, ledit moyen de sélection générant des données de sélection identifiant des éléments d'image sujet sélectionnés ; et
un moyen d'émission pour émettre les données codées desdits éléments d'image élémentaire et desdits éléments d'image sujet sélectionnés et lesdites données de sélection.
